# EUROPÄISCHE PATENTSCHRIFT

(11) **EP 2 555 040 B1**
(45) Veröffentlichungstag und Bekanntmachung des Hinweises auf die Patenterteilung: **28.09.2016**
(21) Anmeldenummer: 12178837.6
(22) Anmeldetag: 01.08.2012
(51) Int. Cl.: G02B 21/00, G01J 3/02, G01J 1/04, G02B 26/08

(54) **Einrichtung zur variablen Umlenkung von Licht**
Device for the variable light switching
Dispositif pour la commutation de lumière variable

(30) Priorität: 01.08.2011 DE 102011052336
(43) Veröffentlichungstag der Anmeldung: 06.02.2013
(73) Patentinhaber: Leica Microsystems CMS GmbH, 35578 Wetzlar (DE)
(72) Erfinder: Schreiber, Frank, 69221 Dossenheim (DE)
(74) Vertreter: Schaumburg und Partner Patentanwälte mbB

(56) Entgegenhaltungen:
- WO-A2-2009/015139
- DE-A1- 19 835 072
- US-A1- 2002 034 356
- US-A1- 2002 076 138
- US-A1- 2003 058 520

## Beschreibung

Die Erfindung betrifft ein Mikroskop mit einer Einrichtung zur variablen Umlenkung von Licht, wobei die Einrichtung eine mikromechanische Spiegelanordnung mit einer Vielzahl das Licht reflektierender Spiegelaktoren und eine Steuereinheit umfasst, mit der die Spiegelaktoren zum Variieren der Lichtumlenkung in verschiedene Reflexionsstellungen steuerbar sind.

In der Mikroskopie, insbesondere der Konfokalmikroskopie sind häufig Einrichtungen vorgesehen, die am Ende des Abbildungsstrahlenganges eine selektive Detektion von einzelnen spektralen Anteilen des Detektionslicht ermöglichen. Hierzu kommen häufig Strahlteiler zum Einsatz, die einen bestimmten spektralen Anteil des Lichtes transmittieren, während sie die übrigen spektralen Anteile reflektieren. Dadurch kann beispielsweise die von einer abzubildenden Probe ausgesendete Fluoreszenzstrahlung selektiv detektiert werden.

Eine alternative Möglichkeit zur selektiven Lichtdetektion besteht darin, das Detektionslicht zunächst durch ein dispergierendes optisches Elementes, z.B. ein Prisma, zu leiten, welches das Detektionslicht wellenlängenabhängig bricht und dadurch ein spektral zerlegtes, divergierendes Lichtbündel erzeugt. Dieses Lichtbündel wird anschließend einer Spiegelschiebervorrichtung zugeführt, die aus mehreren Kaskaden von Spiegeln gebildet ist. Jede dieser Spiegelkaskaden besteht aus zwei Spiegelelementen, die durch eine Lücke voneinander getrennt sind. Durch diese Lücke tritt ein Teil des spektral aufgespaltenen Lichtbündels, während der übrige Teil des Lichtbündels an den Spiegelelementen auf eine weitere Spiegelkaskade reflektiert wird, die wiederum einen bestimmten spektralen Anteil auf einen anderen Detektor leitet.

Gegenüber den im Stand der Technik überwiegend verwendeten Strahlteilern hat eine solche Spiegelschiebervorrichtung den Vorteil, dass sich durch Verschieben der Spiegelelemente die den Detektoren zuzuführenden spektralen Anteile in einfacher Weise verändern lassen. Beispiele für eine solche Spiegelschiebervorrichtung sind in der DE 43 30 347 A1 und der DE 100 38 049 A1 beschrieben.

Die Spiegelschiebervorrichtungen haben jedoch den Nachteil, dass sie vergleichsweise kompliziert aufgebaut sind, um die gewünschte Flexibilität in der Auswahl der zu detektierenden spektralen Lichtanteile zu ermöglichen. So werden präzise arbeitende Motoren benötigt, um die Spiegelelemente jeweils in die gewünschte Position zu bewegen. Zudem ist das Verstellen der Spiegelelemente vergleichsweise zeitaufwendig.

In der US 6 396 053 B1 ist ein Abtastmikroskop offenbart, die eine Lichtumlenkeinrichtung enthält, welche die spektralen Anteile eines durch ein Prisma spektral zerlegten Lichtbündels wahlweise verschiedenen Detektoren zuführt. Diese Lichtumlenkeinrichtung umfasst eine mikromechanische Spiegelanordnung mit einer Vielzahl von Spiegelaktoren, die sich einzeln in verschiedene Reflexionsstellungen bewegen können. So sind für jeden dieser Spiegelaktoren fünf verschiedene Reflexionsstellungen und damit fünf verschiedene Umlenkwinkel vorgesehen, um das Licht wahlweise auf die verschiedenen Detektoren zu leiten. Diese vergleichsweise große Anzahl an verschiedenen Reflexionsstellungen, die jeder einzelne Spiegelaktor einnehmen kann, erfordert eine präzise Ansteuerung des jeweiligen Spiegelaktors, welche die technische Umsetzung dieser vorbekannten Lichtumlenkeinrichtung schwierig macht.

Zum Stand der Technik wird ferner auf sogenannte DLP-Systeme (DLP: Digital Light Processing) verwiesen, die in der Projektionstechnik beispielsweise für Videoprojektoren zum Einsatz kommen. Solche DLP-Systeme umfassen ebenfalls eine mikromechanische Spiegelanordnung mit einer Vielzahl in Form einer Matrix angeordneter Spiegelaktoren. Jedoch sind für diese Spiegelaktoren jeweils nur genau zwei Reflexionsstellungen vorgesehen, zwischen denen der Spiegelaktor bis zu einige tausend Mal pro Sekunde hin und her bewegt werden kann. Über jeden Spiegelaktor lässt sich ein Bildpunkt oder Pixel darstellen, dessen Helligkeit über die Gesamtzeit eingestellt wird, während der sich der jeweilige Spiegelaktor innerhalb eines vorbestimmten Zeitintervalls in der einen oder in der anderen Reflexionsstellung befindet.

Aufgrund der kurzen Schaltzeiten wäre es wünschenswert, die vorstehend erläuterte DLP-Technik beispielsweise auch in der Konfokalmikroskopie zur Umlenkung von Detektionslicht auf verschiedene Detektoren einzusetzen. Jedoch lassen sich diese kurzen Schaltzeiten nur dadurch verwirklichen, dass für jeden einzelnen Spiegelaktor nur genau zwei definierte Reflexionsstellungen vorgesehen sind, die letztlich auch nur zwei verschiedene Umlenkrichtungen ermöglichen. In typischen Konfokalanwendungen ist jedoch die Umlenkung von Licht in mehr als zwei Richtungen wünschenswert.

Ein Mikroskop mit einer Lichtumlenkeinrichtung nach dem Oberbegriff des Anspruchs 1 ist aus der DE 198 3S 072 A1 bekannt.

Die Druckschriften WO 2009/015139 A2, US 2002/076138 A1, US 2002/034356 A1 und US 2003/058520 A1 offenbaren Systeme zur optischen Datenübertragung, die jeweils eine Lichtumlenkeinrichtung aufweisen, die eine mikromechanische Spiegelanordnung mit einer Vielzahl von Spiegelaktoren sowie eine dieser Anordnung angepasste Rückreflexionsstruktur aufweisen.

Aufgabe der Erfindung ist es, ein Mikroskop mit einer Lichtumlenkeinrichtung eingangs genannter Art so weiterzubilden, dass mit einfachen technischen Mitteln eine schnelle und präzise Umschaltung der Umlenkrichtungen möglich ist.

Die Erfindung löst diese Aufgabe durch die Merkmale des Anspruchs 1.

Die Erfindung sieht demnach zusätzlich zu der mikromechanischen Spiegelanordnung eine Rückreflexionsstruktur vor, die so an die Spiegelanordnung angepasst ist, dass sich innerhalb der Umlenkeinrichtung in Abhängigkeit der verschiedenen Reflexionsstellungen der Spiegelaktoren verschiedene Umlenkpfade für das Licht realisieren lassen, wodurch sich die durch die erfindungsgemäße Einrichtung bewirkte Lichtumlenkung nach Belieben steuern lässt. Hierzu ist die Rückreflexionsstruktur gegenüber der Spiegelanordnung so angeordnet, dass sie im Zusammenwirken mit dem die Spiegelanordnung bildenden Spiegelaktoren die gewünschten Umlenkpfade bereitstellt, die sich durch eine entsprechende Ansteuerung der Spiegelaktoren frei wählen lassen. Unter einer planmäßigen Anpassung der Rückreflexionsstruktur an die Spiegelanordnung ist demnach eine geeignete räumliche Anordnung der Rückreflexionsstruktur relativ zur Spiegelanordnung gemeint, durch die sich die verschiedenen Umlenkpfade einstellen lassen.

So kann die erfindungsgemäße Rückreflexionsstruktur so ausgebildet sein, dass in Abhängigkeit der Reflexionsstellungen der Spiegelaktoren Mehrfachreflexionen zwischen den Spiegelaktoren und der Rückreflexionsstruktur nach Art einer Spiegelkaskade möglich sind. So ist es beispielsweise denkbar, dass ein jeweiliger Spiegelaktor das Licht, das die Rückreflexionsstruktur auf ihn reflektiert, in einer ersten Reflexionsstellung wieder auf die Rückreflexionsstruktur sendet und damit das Licht innerhalb der durch die Spiegelanordnung und die Rückreflexionsstruktur gebildeten Einheit hält, während er in einer zweiten Reflexionsstellung das Licht aus dieser Einheit heraus reflektiert. Unter Anwendung dieses Prinzips lässt sich die Lichtumlenkung in weiten Grenzen variieren.

Als mikromechanische Spiegelanordnung wird vorzugsweise ein DLP-Baustein verwendet, bei dem sich die Spiegelaktoren mit sehr kurzen Schaltzeiten, die in der Größenordnung von Millisekunden liegen, einzeln ansteuern lassen. Dabei weisen die einzelnen Spiegelaktoren üblicherweise Kantenlängen auf, die in einem Bereich von einigen Mikrometern oder hundert Mikrometern liegen. Eine solche mikromechanische Spiegelanordnung ermöglicht demnach eine variable Lichtumlenkung mit hoher zeitlicher und räumlicher Auflösung. Außerdem kann sie in Form eines kompakten MOEM-Bauteils, das eine lange Lebensdauer aufweist und weitgehend unempfindlich gegenüber Temperaturschwankungen und Luftfeuchtigkeit ist, kostengünstig gefertigt werden. Dadurch stellt die Erfindung einen präzise und schnell arbeitenden digitalen Lichtwähler bereit.

Da die Rückreflexionsstruktur im Zusammenwirken mit der aus den Spiegelaktoren gebildeten Spiegelanordnung Mehrfachreflexionen innerhalb der erfindungsgemäßen Einrichtung ermöglicht, kommen die Spiegelaktoren auch mit wenigen, vorzugsweise nur genau zwei definierten Reflexionsstellungen aus, um die gewünschte Vielfalt an Umlenkpfaden in der Einrichtung zu realisieren. Dies erleichtert die Ansteuerung der Spiegelaktoren und erhöht zudem die Präzision, mit dem das Licht umgelenkt werden kann.

Das erfindungsgemäße Prinzip der Anwendung von Mehrfachreflexionen unter Einbeziehung der Rückreflexionsstruktur beinhaltet eine beliebige Umkehrbarkeit des Lichtwegs, auf dem das Licht umgelenkt wird. So kann die erfindungsgemäße Einrichtung beispielsweise dazu genutzt werden, Licht, das von verschiedenen, räumlich verteilten Lichtquellen ausgesendet wird, in eine vorbestimmte (einzige) Richtung zu schalten. Ebenso ist es denkbar, Licht, das aus einer einzigen Lichtquelle stammt, in verschiedene Richtungen zu schalten. Auch Mischformen dieser beiden vorstehend genannten Umlenkprinzipien sind denkbar.

Die Spiegelaktoren sind vorzugsweise baugleiche Elemente mit identischen Abmessungen. Sie können jedoch auch unterschiedliche Abmessungen aufweisen, z.B. wenn der erfindungsgemäßen Lichtumlenkung ein Prisma vorgeordnet ist, welches das Licht spektral zerlegt und damit in ein Lichtbündel umsetzt, das wellenlängenabhängig divergiert. In diesem Fall kann die wellenlängenabhängige Aufweitung des Lichtbündels durch eine entsprechende Größenanpassung der einzelnen Spiegelaktoren berücksichtigt werden.

Das erfindungsgemäße Zusammenwirken der schnell schaltbaren Spiegelaktoren und der diesen zugewandten Rückreflexionsstruktur ermöglicht eine flexible Anpassung der Umlenkeinrichtung an die jeweils vorliegende Umlenkgeometrie. So ist beispielsweise denkbar, dass das Licht zunächst zentral auf die Spiegelanordnung trifft und dann alternativ durch Mehrfachreflexionen in zwei Richtungen weitergeleitet wird, bevor es aus der Einrichtung austritt. Ebenso kann das Licht zunächst am Rand auf die Spiegelanordnung treffen und dann in eine vorbestimmte Richtung weitergeleitet werden. Ferner kann das zu lenkende Licht aus mehreren Lichtstrahlen gebildet sein, die alle unter dem gleichen Winkel oder aber unter verschiedenen Winkeln auf die Umlenkeinrichtung fallen. Ebenso können die von der Umlenkeinrichtung weg reflektierten Lichtstrahlen gleiche Austrittswinkel oder aber unterschiedliche Austrittswinkel aufweisen.

Eine bevorzugte Ausgestaltung, in der die Spiegelaktoren jeweils in genau zwei Reflexionsstellungen steuerbar sind, sieht für jeden Spiegelaktor zwei Anschläge zur Festlegung der beiden Reflexionsstellungen vor. Damit lassen sich die Spiegelaktoren jeweils schnell und präzise in die gewünschte Reflexionsstellung schalten, um die gewünschte Lichtumlenkung zu erzielen.

Vorzugsweise ist die Rückreflexionsstruktur ortsfest ausgebildet. Die Kombination aus schaltbaren Spiegelaktoren und der ortsfesten Rückreflexionsstruktur begünstigt eine besonders einfache Ansteuerung der mikromechanischen Spiegelanordnung zur Erzielung der gewünschten Lichtumlenkung. Alternativ kann die Rückreflexionsstruktur auch aus beweglichen Elementen gebildet sein. Insbesondere ist es möglich, auch für die Rückreflexionsstruktur eine mikromechanische Spiegelanordnung vorzusehen.

In einer bevorzugten Ausführung bilden die Spiegelaktoren mehrere parallel zueinander liegende Spiegelreihen. Jede dieser Spiegelreihen kann beispielsweise dazu genutzt werden, einen bestimmten spektralen Anteil des Lichtes oder aber aus unterschiedlichen Richtungen einfallende Lichtstrahlen in der gewünschten Weise umzulenken.

Die in der jeweiligen Spiegelreihe angeordneten Spiegelaktoren weisen beispielsweise in ihren Reflexionsstellungen gleiche Kippwinkel relativ zu einer gemeinsamen Referenzebene der Spiegelanordnung auf. Das Vorsehen gleicher Kippwinkel vereinfacht den Aufbau der mikromechanischen Spiegelanordnung.

Alternativ können die in der jeweiligen Spiegelreihe angeordneten Spiegelaktoren aber auch in ihren Reflexionsstellungen jeweils unterschiedliche Kippwinkel relativ zu einer gemeinsamen Referenzebene der Spiegelanordnung aufweisen. Dadurch ist es beispielsweise möglich, bei mittigem Lichteintritt die Mehrfachreflexionen in der aus der Spiegelanordnung und der Rückreflexionsstruktur gebildeten Einheit so zu realisieren, dass alle möglichen Austrittsbereiche den gleichen Lichtaustrittswinkel aufweisen.

In einer bevorzugten Ausgestaltung weist die Rückreflexionsstruktur mehrere Reflexionselemente und mehrere lichtdurchlässige Transmissonselemente auf, wobei mindestens eines der Transmissonselemente einen Lichteintrittsbereich für das umzulenkende Licht bildet, während die anderen Transmissionselemente Lichtaustrittsbereiche für das an den Spiegelaktoren reflektierte Licht bilden. Dabei ist das in den Lichteintrittsbereich eintretende Licht in Abhängigkeit der Reflexionsstellungen der das Licht reflektierenden Spiegelaktoren wahlweise in einen der Lichtaustrittsbereiche umlenkbar. Bei dieser Ausgestaltung sorgen die Reflexionselemente im Zusammenwirken mit den Spiegelaktoren für die Mehrfachreflexionen innerhalb der aus der Spiegelanordnung und der Rückreflexionsstruktur gebildeten Einheit, während die lichtdurchlässigen Transmissionselemente den Lichteintritt in bzw. den Lichtaustritt aus dieser Einheit ermöglichen.

Vorzugsweise sind die Reflexionselemente und die Transmissionselemente parallel zueinander und alternierend angeordnet. Die Reflexionselemente und die Transmissionselemente bilden hier ein gleichsam streifenförmiges Rückreflexionsmuster, das nach Belieben an die Geometrie der Spiegelanordnung, in der die Spiegelaktoren vorzugsweise in parallelen Spiegelreihen angeordnet sind, angepasst werden kann.

In einer bevorzugten Ausführung ist der Lichteintrittsbereich mittig zwischen den Lichtaustrittsbereichen angeordnet. Diese Ausgestaltung ist beispielsweise anwendbar, wenn ein zentraler Lichteinfall und eine anschließende Umlenkung aus der Mitte zu den Rändern der Einrichtung hin gewünscht ist. Es ist jedoch ebenso denkbar, dass der Lichteintrittsbereich am Rand der Einrichtung vorgesehen ist, so dass das Licht anschließend von diesem Rand weg in eine vorbestimmte Richtung umgeleitet wird.

Vorzugsweise sind die Reflexionselemente und die Transmissionselemente in einer von der Spiegelanordnung beabstandeten Ebene angeordnet und erstrecken sich in der Projektion auf die Spiegelanordnung orthogonal zu den Spiegelreihen. In dieser Ausgestaltung sind also die die Rückreflexionsstruktur bildenden Elemente und die Spiegelreihen gleichsam kreuzweise angeordnet. Dies ermöglicht eine besonders einfache planmäßige Anpassung der Rückreflexionsstruktur an die Spiegelanordnung, um beispielsweise die gewünschten Mehrfachreflexionen bei Umlenkung eines durch eine spektrale Aufweitung divergierenden Lichtbündels zu bewirken.

Vorzugsweise ist in der jeweiligen Spiegelreihe mindestens einer der Spiegelaktoren in der Projektion auf die Rückreflexionsstruktur auf eines der Transmissionselemente ausgerichtet. In dieser Ausführung sind die Spiegelaktoren beispielsweise jeweils unterhalb eines der Transmissonselemente angeordnet, die als Lichteintrittsbereiche oder Lichtsaustrittsbereiche dienen können. Dies ermöglicht einen senkrechten Lichteinfall in bzw. einen senkrechten Lichtaustritt aus der Umlenkeinrichtung, was beispielsweise die Ausrichtung der Umlenkeinrichtung auf eine Lichtquelle oder einen Detektor vereinfacht.

Es sind ein Gehäuse, in dem die Spiegelanordnung untergebracht ist, und eine an dem Gehäuse angebrachte transparente Abdeckung vorgesehen, an der die Rückreflexionsstruktur ausgebildet ist. Die transparente Abdeckung ist beispielsweise eine Glasplatte, an der die Rückreflexionsstruktur in Form einer Reflexionsbeschichtung ausgebildet ist. Vorzugsweise befindet sich die Rückreflexionsstruktur an der der Spiegelanordnung zugewandten Unterseite der Abdeckung. Dies begünstigt verlustfreie Mehrfachreflexionen zwischen der Spiegelanordnung und der Rückreflexionsstruktur. Jedoch kann die Rückreflexionsstruktur auch auf der Oberseite der Abdeckung oder außerhalb der Abdeckung angeordnet sein. Vorzugsweise ist die transparente Abdeckung beidseitig antireflexbeschichtet, so dass nicht erwünschte Mehrfachreflexionen zwischen der Spiegelanordnung und der Rückreflexionsstruktur vermieden werden.

In einer besonders bevorzugten Ausführung ist ein Dispersionselement vorgesehen, das durch spektrale Zerlegung des Lichtes ein Lichteintrittsbündel derart erzeugt, dass das Lichteintrittsbündel einen durch die spektrale Zerlegung langgestreckten Lichtbündelquerschnitt aufweist, mit dem das Lichteintrittsbündel durch den Lichteintrittsbereich orthogonal zu den Spiegelreihen auf die Spiegelanordnung fällt, wobei den Spiegelreihen jeweils ein vorbestimmter Spektralbereich des Lichteintrittsbündels zugeordnet ist. Diese Ausführung kann insbesondere in einem Konfokalmikroskop gewinnbringend eingesetzt werden, um dort die bisher verwendeten Spiegelschiebervorrichtungen durch die erfindungsgemäße Umlenkeinrichtung zu ersetzen, die eine besonders schnelle und präzise Umlenkung unterschiedlicher spektraler Anteile des Lichtes beispielsweise auf verschiedene Detektoren ermöglicht. Dabei empfängt jede Spiegelreihe einen vorbestimmten Spektralbereich des Lichteintrittsbündels, der dann unabhängig von den anderen Spektralbereichen wahlweise in eine gewünschte Umlenkrichtung geleitet werden kann.

Vorzugsweise sind die Spiegelreihen zu mehreren Gruppen zusammengefasst, die jeweils durch Umlenken des Lichteintrittsbündels ein Austrittslichtbündel vorbestimmter spektraler Zusammensetzung erzeugen, das aus einem der Lichtaustrittsbereiche austritt. Indem die Spiegelreihen zu mehreren (auch nicht zusammenhängenden) Gruppen kombiniert werden, von denen jede einzelne Gruppe ein in eine bestimmte Richtung umgelenktes Lichtaustrittsbündel vorbestimmter spektraler Zusammensetzung erzeugt, kann das umgelenkte Licht in Abhängigkeit seiner spektralen Zusammensetzung beliebig auf verschiedene Detektoren verteilt werden. Insbesondere muss im Unterschied zu den bisher verwendeten Spiegelschiebervorrichtungen den einzelnen Detektoren kein zusammenhängender Wellenlängenbereich mehr zugeordnet werden. So ist es beispielsweise in der fluoreszenzmikroskopischen Anwendung möglich, das komplette Fluoreszenzband auf einen einzigen Detektor zu richten und gleichzeitig die darin liegenden Anregungslichtwellenlängen auszusparen. Gegenüber bekannten Spiegelschiebervorrichtungen hat die erfindungsgemäße Umlenkeinrichtung ferner den Vorteil, dass jedem Spiegelaktor ein fester Wellenlängenbereich zugeordnet ist, der sich bei einer Änderung der Wellenlängenzuordnung zu bestimmten Detektoren nicht ändert. Demgegenüber können bei Spiegelschiebervorrichtungen, bei denen die Spiegelpaare motorisch bewegt werden, einzelne Motorenschritte gleichsam verloren gehen, was zu einer Verschiebung des Spektrums führt.

Vorzugsweise umfasst die Einrichtung mehrere Detektoren zum Erfassen jeweils mindestens eines der Austrittslichtbündel. Wie schon vorstehend angedeutet, ist es für die Verwendung der erfindungsgemäßen Umlenkeinrichtung nicht erforderlich, dass die den einzelnen Detektoren zugeordneten Wellenlängenbereiche zusammenhängend, also z.B. monoton auf- oder absteigend sein müssen. Ist ein bestimmter Detektor für eine spezielle Anwendung z.B in der Fluoreszenzlebensdauer-Mikroskopie oder der Fluoreszenzkorrelationsspektroskopie und/oder bei der Anwendung eines bestimmten Verfahrens, wie z.B. eines Gating-Verfahrens, besonders gut geeignet, so kann ihm jeder beliebige Wellenlängenbereich zugeordnet werden, unabhängig davon, wo sich der Detektor in dem betrachteten System befindet. Dies bedeutet, dass es die erfindungsgemäße Einrichtung gestattet, jeder Wellenlänge den hierfür am besten geeigneten Detektor zuzuordnen.

Nach einem weiteren Aspekt der Erfindung ist ein optisches Gerät, insbesondere ein Mikroskop und besonders bevorzugt ein Konfokalmikroskop vorgesehen, das mit einer Einrichtung vorstehend beschriebener Art zur variablen Umlenkung von Licht ausgestattet ist.

Die Erfindung wird im Folgenden anhand eines Ausführungsbeispiels unter Bezugnahme auf die Figuren beschrieben. Darin zeigen:
- Fig. 1: eine geschnittene Seitenansicht einer Umlenkeinheit, die Teil einer erfindungsgemäßen Umlenkeinrichtung ist;
- Fig. 2: eine perspektivische Draufsicht auf die Umlenkeinheit; und
- Fig. 3: eine schematische Darstellung zur Veranschaulichung eines Anwendungsbeispiels der erfindungsgemäßen Umlenkeinrichtung.

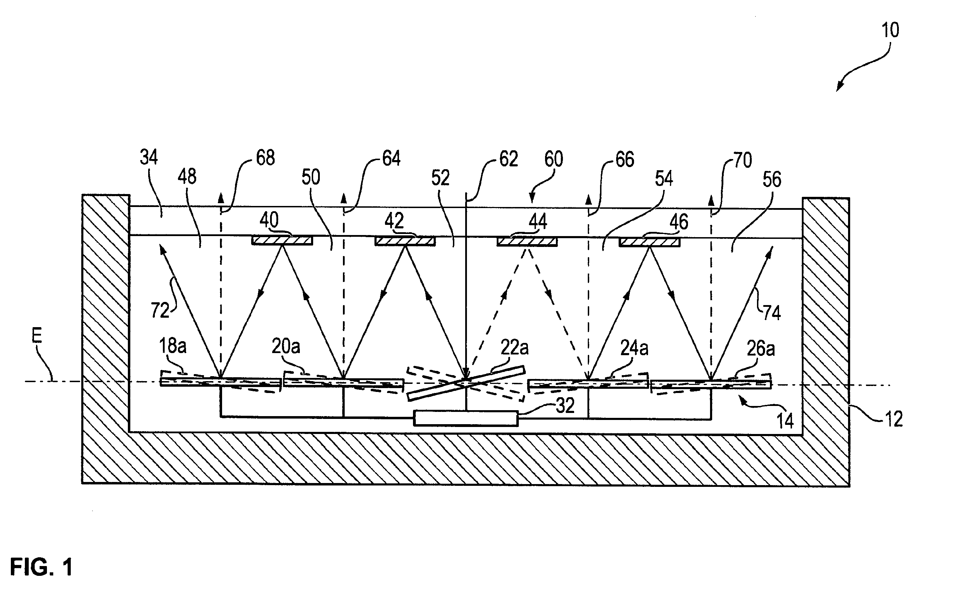

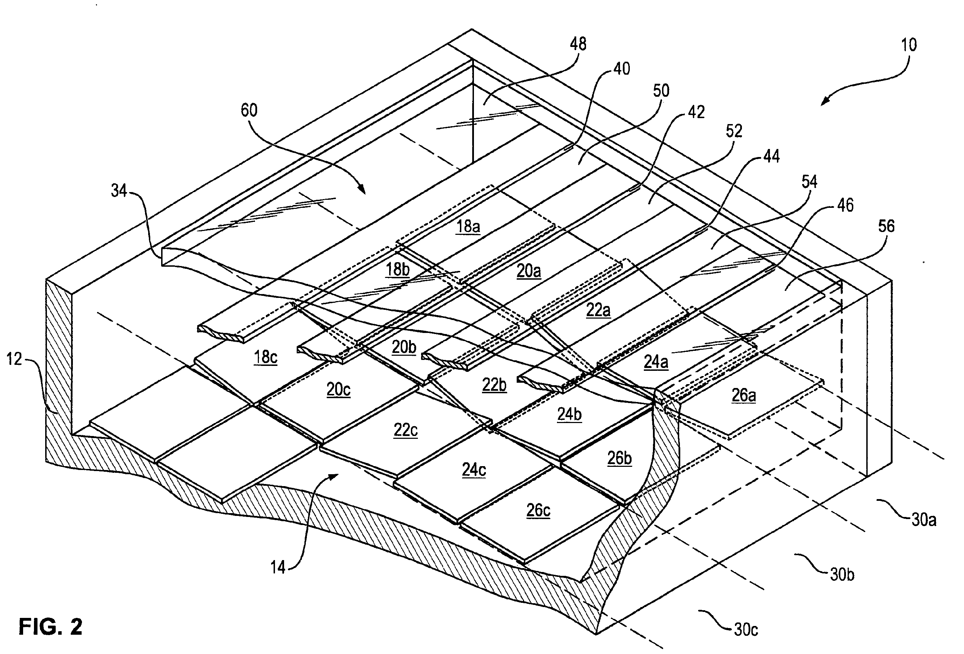

In den Figuren 1 und 2 ist eine Umlenkeinheit 10 in einer geschnittenen Seitenansicht bzw. in einer Draufsicht gezeigt. Die Umlenkeinheit 10 ist Teil einer Einrichtung, die beispielsweise in einem Konfokalmikroskop eingesetzt wird, um spektral aufgespaltenes Licht verschiedenen Detektoren zuzuführen.

Die Umlenkeinheit 10 hat ein Gehäuse 12, in dem eine mikromechanische Spiegelanordnung 14 untergebracht ist. Die Spiegelanordnung 14 ist beispielsweise ein DLP-Bauteil und besteht aus einer Vielzahl von matrixförmig angeordneten Spiegelaktoren, von denen in der Figur 1 rein beispielhaft fünf mit 18a bis 26a bezeichnete Aktoren und in Figur 2 fünfzehn mit 18a bis 26a, 18b bis 26b und 18c bis 26C bezeichnete Aktoren dargestellt sind. Dabei ist darauf hinzuweisen, dass die Darstellungen nach den Figuren 1 und 2 lediglich der Veranschaulichung dienen. In der praktischen Umsetzung werden deutlich mehr Spiegelaktoren vorgesehen sein, beispielsweise je nach Anwendung in einem Bereich von einigen hundert bis einigen tausend Aktoren. Wie in der perspektivischen Draufsicht nach Figur 2 gezeigt ist, bilden die Spiegelaktoren parallel zueinander angeordnete Spiegelreihen, von denen in Figur 2 wiederum nur drei mit 30a, 30b und 30c bezeichnete Reihen dargestellt sind.

Die folgenden Ausführungen betreffen die aus den Spiegelaktoren 18a bis 26a gebildete Spiegelreihe 30a. Diese Ausführungen gelten entsprechend für die anderen Spiegelreihen.

Die Spiegelaktoren 18a bis 26a sind jeder für sich relativ zu einer gemeinsamen Referenzebene E der Spiegelanordnung 14 verkippbar. Dabei sind für jeden Spiegelaktor 18a bis 26a zwei in Figur 1 nicht gezeigte Anschläge vorgesehen, die zwei unterschiedliche Reflexionsstellungen des jeweiligen Spiegelaktors 18a bis 26a definieren. In Figur 1 ist jeweils eine der beiden Reflexionsstellungen mit einer durchgezogenen Linie und die andere mit einer gestrichelten Linie veranschaulicht. Wie der Figur 1 ferner zu entnehmen ist, weisen die Spiegelaktoren 18a bis 26a jeweils in ihren Reflexionsstellungen unterschiedliche Kippwinkel relativ zu der Referenzebene E auf. Zur Ansteuerung der Spiegelaktoren 18a bis 26a ist eine Steuereinheit 32 vorgesehen, welche die Beaufschlagung jedes einzelnen Spiegelaktors 18a bis 26a mit einer beispielsweise elektrostatischen Verstellkraft veranlassen kann, um den jeweiligen Spiegelaktor 18a bis 26a zwischen seinen beiden definierten Reflexionsstellungen umzuschalten.

An der oberen Seite des Gehäuses 12 ist ein Deckglas 34 angebracht, welches das Gehäuse 12 abdeckt. An der der Spiegelanordnung 14 zugewandten Unterseite des Deckglases 34 sind längliche Reflexionselemente 40, 42, 44 und 46 ausgebildet, die parallel zueinander angeordnet sind und in der Projektion auf die Spiegelanordnung 14 orthogonal zu den Spiegelreihen 30a, 30b und 30c verlaufen. Die Reflexionselemente 40, 42, 44 und 46 sind in dem vorliegenden Ausführungsbeispiel reflektierende Beschichtungen, die auf das Deckglas 34 aufgedampft sind. Zwischen den Reflexionselementen 40, 42, 44 und 46 sowie an den Rändern des Deckglases 34 (vgl. Figur 2) sind Bereiche vorhanden, die keine reflektierende Beschichtung aufweisen. Diese in Figur 1 mit 48, 50, 52, 54 und 56 bezeichnenden Bereiche sind demnach lichtdurchlässig und werden im Folgenden als Transmissionselemente bezeichnet. Wie in Figur 2 gezeigt, verlaufen auch die Transmissionselemente 48 bis 56 in der Projektion auf die Spiegelanordnung 14 orthogonal zu den Spiegelreihen 30a, 30b und 30c.

Die Reflexionselemente 40 bis 46 sowie die Transmissionselemente 48 bis 56 bilden eine in Figur 1 allgemein mit 60 bezeichnete Rückreflexionsstruktur, die dazu dient, innerhalb der Umlenkeinheit 10 durch Mehrfachreflexionen des einfallenden Lichtes verschiedene Umlenkpfade zu ermöglichen, um das Licht in gewünschter Weise umzulenken. Das Zusammenwirken der verstellbaren Spiegelaktoren 18a bis 26a und der diesen zugewandten Rückreflexionsstruktur 60 wird im Folgenden unter Bezugnahme auf Figur 1 erläutert.

In dem in Figur 1 gezeigten Beispiel soll die Umlenkeinheit 10 senkrecht einfallendes Licht wahlweise zu verschiedenen Austrittsbereichen lenken. Dabei soll für das vorliegende Beispiel angenommen werden, dass das Licht in Form eines Eintrittslichtbündels 62 in einen länglichen, zentralen Lichteintrittsbereich eintritt, der durch das Transmissionselement 52 gebildet ist. Das Eintrittslichtbündel 62 fällt unter anderem auf den Spiegelaktor 22a, der das Licht in Abhängigkeit seiner Reflexionsstellung entweder (in Figur 1 nach links) auf das Reflexionselement 42 oder (in Figur 1 nach rechts) auf das Reflexionselement 44 richtet. Das auf das Reflexionselement 42 bzw. das Reflexionselement 44 fallende Licht wird dann zurück auf den Spiegelaktor 20a bzw. den Spiegelaktor 24a reflektiert. Der Spiegelaktor 20a bzw. 24a richtet dann das Licht in Abhängigkeit seiner Reflexionsstellung entweder auf das Reflexionselement 40 bzw. 46 oder auf den lichtdurchlässigen Bereich 50 bzw. 54, durch den das Licht aus der Umlenkeinheit 10 austritt. Die beiden vorstehend genannten Austrittsmöglichkeiten sind in Figur 1 durch Austrittslichtbündel 64 und 66 veranschaulicht.

In entsprechender Weise sind durch die in Figur 1 gezeigte Anordnung in Abhängigkeit der Reflexionsstellungen der weiteren Spiegelaktoren 18a und 26a weitere Austrittslichtbündel 68, 70, 72 und 74 generierbar.

Die in Figur 1 im Schnitt dargestellte, durch die Spiegelaktoren 18a bis 26a gebildete Spiegelreihe 30a ist also im Zusammenwirken mit der ihr zugewandten Rückreflexionsstruktur 60 imstande, aus dem Eintrittslichtbündel 62 wahlweise eines der Austrittslichtbündel 64 bis 70 zu erzeugen. Entsprechendes gilt für die in Figur 2 gezeigten Spiegelreihen 30b und 30c. Jede Spiegelreihe 30a, 30b, 30c kann so das auf sie fallende Licht in Abhängigkeit der Reflexionsstellungen ihrer Spiegelaktoren wahlweise in eine von mehreren möglichen Richtungen umlenken.

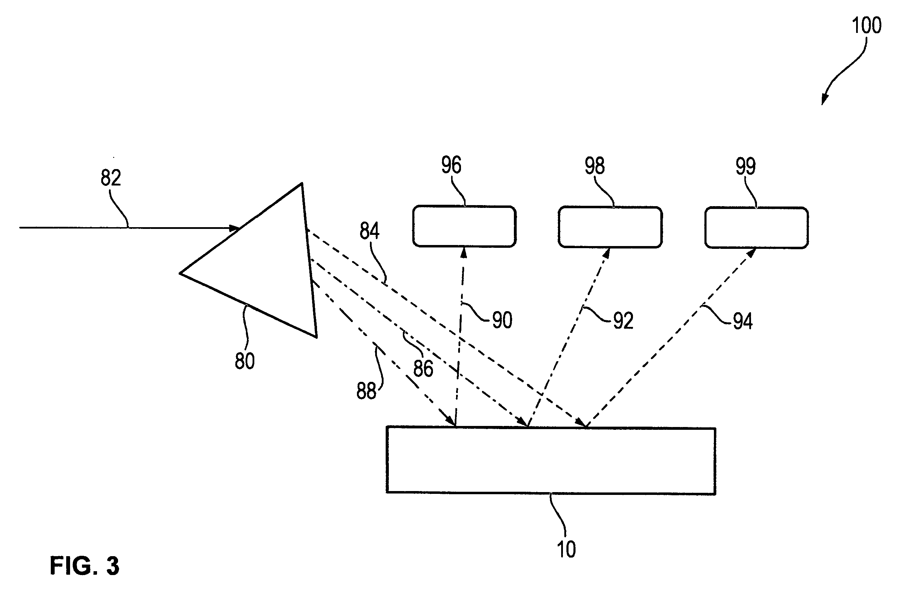

In dem vorliegenden Ausführungsbeispiel ist jeder Spiegelreihe 30a, 30b, 30c ein vorbestimmter Wellenlängenbereich des einfallenden Lichtes zugeordnet. Somit ist die Umlenkeinheit 10 imstande, das Licht in Abhängigkeit der Wellenlänge in verschiedene Richtungen umzulenken. Diese Anwendung ist nochmals in der Figur 3 veranschaulicht.

Figur 3 zeigt schematisch eine allgemein mit 100 bezeichnete Umlenkeinrichtung, bei der der Umlenkeinheit 10 ein Prisma 80 vorgeordnet ist. Das Prisma 80 dient dazu, ein einfallendes Lichtbündel 82 spektral zu zerlegen und so ein divergierendes Lichtbündel zu erzeugen, das einen durch die spektrale Zerlegung langgestreckten Lichtbündelquerschnitt aufweist. In Figur 3 ist dieser spektral zerlegte Lichtbündelquerschnitt durch drei Teilbündel 84, 86 und 88 veranschaulich, die jeweils einen spektralen Anteil des Lichtbündels 82 darstellen sollen.

Die drei Teilbündel 84, 86 und 88 fallen auf die Umlenkeinheit 10, die dafür sorgt, dass die Teilbündel 84, 86 und 88 in verschiedene Richtungen umgelenkt werden. In dem in Figur 3 gezeigten Beispiel soll das Teilbündel 84 in ein Austrittslichtbündel 90, das Teilbündel 86 in ein Austrittslichtbündel 92 und das Teilbündel 88 in ein Austrittslichtbündel 94 umgesetzt werden. Die Austrittslichtbündel 90, 92 und 94 werden durch die Umlenkeinheit 10 jeweils wahlweise einem von mehreren Detektoren 96, 98, 99 zugeführt. Dabei fällt in dem in Figur 3 dargestellten Beispiel jeweils eines der Austrittslichtbündel 90, 92 und 94 auf einen der Detektoren 96, 98 und 99. Dies ist jedoch nur rein beispielhaft zu verstehen. Es ist beispielsweise ebenso möglich, dass zwei der drei Austrittslichtbündel 90, 92, 94 auf ein und denselben Detektor geleitet werden.

Um die Austrittsbündel 90, 92 und 94 in der in Figur 3 veranschaulichten Weise zu erzeugen, können die Spiegelreihen in beliebigen Kombinationen zu Gruppen zusammengefasst werden, die jeweils eines der Austrittslichtbündel 90, 92 und 94 generieren. Dabei ist in dem vorliegenden Beispiel vorgesehen, dass das durch die Teilbündel 84, 86 und 88 gebildete Lichteintrittsbündel mit seinem durch die spektrale Zerlegung erzeugten, länglichen Bündelquerschnitt in orthogonaler Ausrichtung auf die Spiegelreihen fällt.

### Bezugszeichenliste

- 10: Umlenkeinheit
- 12: Gehäuse
- 14: Spiegelanordnung
- 18a bis 26a: Spiegelaktoren
- 18b bis 26b: Spiegelaktoren
- 18c bis 26c: Spiegelaktoren
- 30a bis 30c: Spiegelreihen
- 32: Steuereinheit
- 34: Deckglas
- 40, 42, 44, 46: Reflexionselemente
- 48, 50, 52, 54, 56: Transmissionselemente
- 60: Rückreflexionsstruktur
- 62: Eintrittslichtbündel
- 64, 66, 68, 70, 72, 74: Austrittslichtbündel
- 80: Prisma
- 82: Lichtbündel
- 84,86,88: Teilbündel
- 90, 92, 94: Austrittslichtbündel
- 96, 98, 99: Detektoren
- 100: Umlenkeinrichtung

## Patentansprüche

1. Mikroskop mit einer Einrichtung (100) zur variablen Umlenkung von Licht, wobei die Einrichtung (100) umfasst
eine mikromechanische Spiegelanordnung (14) mit einer Vielzahl das Licht reflektierender Spiegelaktoren (18, 20, 22, 24, 26) und
eine Steuereinheit (32), mit der die Spiegelaktoren (18, 20, 22, 24, 26) zum Variieren der Lichtumlenkung in verschiedene Reflexionsstellungen steuerbar sind,
**dadurch gekennzeichnet, dass** die Einrichtung (100) ferner umfasst:
eine der Spiegelanordnung (14) planmäßig angepasste Rückreflexionsstruktur (60) zum gezielten Reflektieren des von einem Teil der Spiegelaktoren (18, 20, 22, 24, 26) auf die Rückreflexionsstruktur (60) reflektierten Lichtes zurück auf einen anderen Teil der Spiegelaktoren (18, 20, 22, 24, 26),
ein Gehäuse (12), in dem die Spiegelanordnung (14) untergebracht ist, und
eine an dem Gehäuse (12) angebrachte transparente Abdeckung (34), an der die Rückreflexionsstruktur (60) ausgebildet ist.

2. Mikroskop nach Anspruch 1, **dadurch gekennzeichnet, dass** die Spiegelaktoren (18, 20, 22, 24, 26) jeweils in genau zwei Reflexionsstellungen steuerbar sind, wobei für jeden Spiegelaktor (18, 20, 22, 24, 26) zwei Anschläge zur Festlegung der beiden Reflexionsstellungen vorgesehen sind.

3. Mikroskop nach einem der vorhergehenden Ansprüche, **dadurch gekennzeichnet, dass** die Spiegelaktoren (18, 20, 22, 24, 26) mehrere parallel zueinander liegende Spiegelreihen (30a, 30b, 30c) bilden.

4. Mikroskop nach Anspruch 3, **dadurch gekennzeichnet, dass** mindestens einer der in der jeweiligen Spiegelreihe (30a, 30b, 30c) angeordneten Spiegelaktoren (18, 20, 22, 24, 26) in seinen Reflexionsstellungen verschieden große Kippwinkel relativ zu einer gemeinsamen Referenzebene (E) der Spiegelanordnung (14) aufweist.

5. Mikroskop nach einem der vorhergehenden Ansprüche, **dadurch gekennzeichnet, dass** die Rückreflexionsstruktur (60) mehrere Reflexionselemente (40, 42, 44, 46) und mehrere lichtdurchlässige Transmissionselemente (48, 50, 52, 54, 56) aufweist, wobei mindestens eines der Transmissionselemente (48, 50, 52, 54, 56) einen Lichteintrittsbereich für das umzulenkende Licht bildet, während die anderen Transmissionselemente Lichtaustrittsbereiche für das an den Spiegelaktoren (18, 20, 22, 24, 26) reflektierte Licht bilden, und
das in den Lichteintrittsbereich eintretende Licht in Abhängigkeit der Reflexionsstellungen der das Licht reflektierenden Spiegelaktoren (18, 20, 22, 24, 26) wahlweise in einen der Lichtaustrittsbereiche umlenkbar ist.

6. Mikroskop nach Anspruch 5, **dadurch gekennzeichnet, dass** die Reflexionselemente (40, 42, 44, 46) und die Transmissionselemente (48, 50, 52, 54, 56) parallel zueinander und alternierend angeordnet sind.

7. Mikroskop nach Anspruch 6, **dadurch gekennzeichnet, dass** der Lichteintrittsbereich mittig zwischen den Lichtaustrittsbereichen angeordnet ist.

8. Mikroskop nach Anspruch 6 oder 7, **dadurch gekennzeichnet, dass** die Reflexionselemente (40, 42, 44, 46, 48) und die Transmissionselemente (50, 52, 54, 56) in einer von der Spiegelanordnung (14) beabstandeten Ebene angeordnet sind und sich in der Projektion auf die Spiegelanordnung (14) orthogonal zu den Spiegelreihen (30a, 30b, 30c) erstrecken.

9. Mikroskop nach Anspruch 8, **dadurch gekennzeichnet, dass** in der jeweiligen Spiegelreihe (30a, 30b, 30c) mindestens einer der Spiegelaktoren (18, 20, 22, 24, 26) in der Projektion auf die Rückreflexionsstruktur (60) auf eines der Transmissionselemente (50, 52, 54, 56) ausgerichtet ist.

10. Mikroskop nach einem der Ansprüche 5 bis 9, **gekennzeichnet durch** ein Dispersionselement (80) zum Erzeugen eines Lichteintrittsbündels (84, 86, 88) **durch** spektrale Zerlegung des Lichtes derart, dass das Lichteintrittsbündel (84, 86, 88) einen **durch** die spektrale Zerlegung langgestreckten Lichtbündelquerschnitt aufweist, mit dem das Lichteintrittsbündel (84, 86, 88) **durch** den Lichteintrittsbereich orthogonal zu den Spiegelreihen (30a, 30b, 30c) auf die Spiegelanordnung (14) fällt, wobei den Spiegelreihen (30a, 30b, 30c) jeweils ein vorbestimmter Spektralbereich des Lichteintrittsbündels (84, 86, 88) zugeordnet ist.

11. Mikroskop nach Anspruch 10, **dadurch gekennzeichnet dass** die Spiegelreihen (30a, 30b, 30c) unterschiedliche Größe haben.

12. Mikroskop nach Anspruch 10 oder 11, **dadurch gekennzeichnet, dass** die Spiegelreihen (30a, 30b, 30c) zu mehreren Gruppen zusammengefasst sind, die jeweils durch Umlenken des Lichteintrittsbündels (84, 86, 88) ein Austrittslichtbündel (90, 92, 94) vorbestimmter spektraler Zusammensetzung erzeugen, das aus einem der Lichtaustrittsbereiche austritt.

13. Mikroskop nach Anspruch 12, **gekennzeichnet durch** mehrere Detektoren (96, 98, 99) zum Erfassen jeweils mindestens eines der Austrittslichtbündel (90, 92, 94).

## Claims

1. Microscope comprising a device (100) for variable deflection of light, the device (100) comprising
a micromechanical mirror arrangement (14) comprising a multiplicity of mirror actuators (18, 20, 22, 24, 26) reflecting the light and
a control unit (32), by means of which the mirror actuators (18, 20, 22, 24, 26) are controllable into various reflection positions for varying the light deflection,
**characterized in that** the device (100) furthermore comprises:
a back-reflection structure (60) systematically adapted to the mirror arrangement (14) for a targeted reflection of the light reflected on the back-reflection structure (60) by some of the mirror actuators (18, 20, 22, 24, 26) onto some other mirror actuators (18, 20, 22, 24, 26),
a housing (12), in which the mirror arrangement (14) is housed, and
a transparent cover (34) which is attached to the housing (12) and on which the back-reflection structure (60) is formed.

2. Microscope according to Claim 1, **characterized in that** the mirror actuators (18, 20, 22, 24, 26) are each controllable into precisely two reflection positions, wherein two stops are provided for each mirror actuator (18, 20, 22, 24, 26) for the purposes of setting the two reflection positions.

3. Microscope according to one of the preceding claims, **characterized in that** the mirror actuators (18, 20, 22, 24, 26) form a plurality of mirror rows (30a, 30b, 30c) lying parallel with one another.

4. Microscope according to Claim 3, **characterized in that**, in the reflection positions thereof, at least one of the mirror actuators (18, 20, 22, 24, 26) arranged in the respective mirror row (30a, 30b, 30c) has differently large tilt angles relative to a common reference plane (E) of the mirror arrangement (14).

5. Microscope according to one of the preceding claims, **characterized in that** the back-reflection structure (60) has a plurality of reflection elements (40, 42, 44, 46) and a plurality of light-transmissive transmission elements (48, 50, 52, 54, 56), wherein at least one of the transmission elements (48, 50, 52, 54, 56) forms a light-entrance region for the light to be deflected, while the other transmission elements form light-exit regions for the light reflected at the mirror actuators (18, 20, 22, 24, 26), and
the light entering into the light-entrance region is optionally deflectable into one of the light-exit regions depending on the reflection positions of the mirror actuators (18, 20, 22, 24, 26) reflecting the light.

6. Microscope according to Claim 5, **characterized in that** the reflection elements (40, 42, 44, 46) and the transmission elements (48, 50, 52, 54, 56) are arranged parallel to one another and in alternation.

7. Microscope according to Claim 6, **characterized in that** the light-entrance region is arranged centrally between the light-exit regions.

8. Microscope according to Claim 6 or 7, **characterized in that** the reflection elements (40, 42, 44, 46, 48) and the transmission elements (50, 52, 54, 56) are arranged in a plane at a distance from the mirror arrangement (14) and extend orthogonal to the mirror rows (30a, 30b, 30c) in the projection onto the mirror arrangement (14).

9. Microscope according to Claim 8, **characterized in that**, in the respective mirror row (30a, 30b, 30c), at least one of the mirror actuators (18, 20, 22, 24, 26) is aligned on one of the transmission elements (50, 52, 54, 56) in the projection onto the back-reflection structure (60) .

10. Microscope according to one of Claims 5 to 9, **characterized by** a dispersion element (80) for generating a light-entrance beam (84, 86, 88) by the spectral decomposition of the light in such a way that the light-entrance beam (84, 86, 88) has a light beam cross section which is elongated by the spectral decomposition, with which light beam cross section the light-entrance beam (84, 86, 88) is incident through the light entrance region on the mirror arrangement (14) in a manner orthogonal to the mirror rows (30a, 30b, 30c), wherein a predetermined spectral region of the light-entrance beam (84, 86, 88) is associated with each mirror row (30a, 30b, 30c).

11. Microscope according to Claim 10, **characterized in that** the mirror rows (30a, 30b, 30c) have different dimensions.

12. Microscope according to Claim 10 or 11, **characterized in that** the mirror rows (30a, 30b, 30c) are combined in a number of groups, which each generate an exit-light beam (90, 92, 94) with a predetermined spectral composition by deflecting the light-entrance beam (84, 86, 88), which exit-light beam emerges from one of the light-exit regions.

13. Microscope according to Claim 12, **characterized by** a plurality of detectors (96, 98, 99) for detecting at least one of the exit-light beams (90, 92, 94) in each case.

## Revendications

1. Microscope comportant un dispositif (100) destiné à dévier de manière variable la lumière, dans lequel le dispositif (100) comprend :
un agencement de miroirs micromécanique (14) comportant une pluralité d'actionneurs de miroirs réfléchissant la lumière (18, 20, 22, 24, 26), et
une unité de commande (32) au moyen de laquelle les actionneurs de miroirs (18, 20, 22, 24, 26) peuvent être commandés de manière à faire varier la déviation de lumière à différentes positions de réflexion,
**caractérisé en ce que** le dispositif (100) comprend en outre :
une structure de rétro-réflexion (60) adaptée de manière planifiée à l'agencement de miroirs (14) pour rétro-réfléchir de manière ciblée la lumière réfléchie par une partie des actionneurs de miroirs (18, 20, 22, 24, 26) sur la structure de rétro-réflexion (60) vers une autre partie des actionneurs de miroirs (18, 20, 22, 24, 26),
un boîtier (12) dans lequel est logé l'agencement de miroirs (14), et
un capot transparent (34) monté sur le boîtier (12), sur lequel est formée la structure de rétro-réflexion (60) .

2. Microscope selon la revendication 1, **caractérisé en ce que** les actionneurs de miroirs (18, 20, 22, 24, 26) peuvent respectivement être commandés à exactement deux positions de réflexion, dans lequel, pour chaque actionneur de miroir (18, 20, 22, 24, 26), il est prévu deux butées permettant de fixer les deux positions de réflexion.

3. Microscope selon l'une quelconque des revendications précédentes, **caractérisé en ce que** les actionneurs de miroirs (18, 20, 22, 24, 26) forment plusieurs rangées de miroirs (30a, 30b, 30c) orientées parallèlement les unes aux autres.

4. Microscope selon la revendication 3, **caractérisé en ce qu'**au moins l'un des actionneurs de miroirs (18, 20, 22, 24, 26) disposés dans les rangées de miroirs respectives (30a, 30b, 30c) présente différents angles d'inclinaison importants de l'agencement de miroirs (14) par rapport à un plan de référence commun (E).

5. Microscope selon l'une quelconque des revendications précédentes, **caractérisé en ce que** la structure de rétro-réflexion (60) comporte plusieurs éléments de réflexion (40, 42, 44, 46) et plusieurs éléments de transmission transparents (48, 50, 52, 54, 56), dans lequel au moins l'un des éléments de transmission (48, 50, 52, 54, 56) forme une région d'entrée de lumière pour la lumière à dévier, alors que les autres éléments de transmission forment des régions de sortie de lumière pour la lumière réfléchie sur les actionneurs de miroirs (18, 20, 22, 24, 26), et
la lumière incidente dans la région d'entrée de lumière peut être déviée de manière sélective dans l'une des régions de sortie de lumière en fonction des positions de réflexion des actionneurs de miroirs (18, 20, 22, 24, 26) réfléchissant la lumière.

6. Microscope selon la revendication 5, **caractérisé en ce que** les éléments de réflexion (40, 42, 44, 46) et les éléments de transmission (48, 50, 52, 54, 56) sont disposés parallèlement les uns aux autres et de manière alternée.

7. Microscope selon la revendication 6, **caractérisé en ce que** la région d'entrée de lumière est disposée en position centrale entre les régions de sortie de lumière.

8. Microscope selon la revendication 6 ou 7, **caractérisé en ce que** les éléments de réflexion (40, 42, 44, 46, 48) et les éléments de transmission (50, 52, 54, 56) sont disposés dans un plan espacé de l'agencement de miroirs (14) et **en ce qu'**ils s'étendent perpendiculairement aux rangées de miroirs (30a, 30b, 30c) en projection sur l'agencement de miroirs (14).

9. Microscope selon la revendication 8, **caractérisé en ce qu'**au moins l'un des actionneurs de miroirs (18, 20, 22, 24, 26) est orienté vers l'un des éléments de transmission (50, 52, 54, 56) en projection sur la structure de rétro-réflexion (60) dans les rangées de miroirs respectives (30a, 30b, 30c).

10. Microscope selon l'une quelconque des revendications 5 à 9, **caractérisé par** un élément de dispersion (80) destiné à générer un faisceau d'entrée de lumière (84, 86, 88) par dispersion spectrale de la lumière de manière à ce que le faisceau d'entrée de lumière (84, 86, 88) présente une section transversale de faisceau lumineux allongée par la dispersion spectrale, au moyen de laquelle le faisceau d'entrée de lumière (84, 86, 88) est incident sur l'agencement de miroirs (14) à travers la région d'entrée de lumière perpendiculairement aux rangées de miroirs (30a, 30b, 30c), dans lequel une région spectrale prédéterminée du faisceau d'entrée de lumière (84, 86, 88) est associée aux rangées de miroirs (30a, 30b, 30c).

11. Microscope selon la revendication 10, **caractérisé en ce que** les rangées de miroirs (30a, 30b, 30c) ont des tailles différentes.

12. Microscope selon la revendication 10 ou 11, **caractérisé en ce que** les rangées de miroirs (30a, 30b, 30c) sont réunies en plusieurs groupes qui génèrent respectivement par déviation du faisceau d'entrée de lumière (84, 86, 88) un faisceau lumineux de sortie (90, 92, 94) de composition spectrale prédéterminée, qui sort de l'une des régions de sortie de lumière.

13. Microscope selon la revendication 12, **caractérisé par** une pluralité de détecteurs (96, 98, 99) destinés à détecter respectivement au moins l'un des faisceaux lumineux de sortie (90, 92, 94).
